# EUROPEAN PATENT APPLICATION

(11) **EP 4 636 460 A1**
(43) Date of publication of application: **22.10.2025**
(21) Application number: 23923651.6
(22) Date of filing: 22.08.2023
(51) Int. Cl.: G02B 27/01, H02J 7/00

(54) **SMART GLASSES**

(30) Priority: 24.02.2023 CN 202320377203 U
(71) Applicant: Huawei Technologies Co., Ltd., Shenzhen, Guangdong 518129 (CN)
(72) Inventor: YE, Bogui, Shenzhen, Guangdong 518129 (CN); LIAO, Zuorui, Shenzhen, Guangdong 518129 (CN)
(74) Representative: MERH-IP Matias Erny Reichl Hoffmann Patentanwälte PartG mbB
(86) International application number: PCT/CN2023/114138
(87) International publication number: WO 2024/174484

(57) **Abstract**

Smart glasses include a first temple (201) and a second temple (202). Power management circuits (301 and 302) are disposed in the first temple (201) and the second temple (202), and the power management circuits (301 and 302) are connected to a load (303) of the smart glasses. When output voltages of the two power management circuits (301 and 302) are not equal, a power management circuit (301 or 302) whose output voltage is higher in the two power management circuits (301 and 302) supplies power to the load (303). When output voltages of the two power management circuits (301 and 302) are equal, the two power management circuits (301 and 302) jointly supply power to the load. Therefore, compared with smart glasses having a battery in one temple, in the smart glasses in this application, more batteries may be disposed, to increase a battery capacity of the smart glasses, thereby improving a battery life. In addition, the power management circuit (301 or 302) in each temple (201 or 202) may separately supply power to the load (303), to ensure normal operation of the load (303); or the two power management circuits (301 and 302) may jointly supply power to the load (303). There are various power supply manners, and therefore, the battery life of the smart glasses can be improved.

## Description

This application claims priority to Chinese Patent Application No. 202320377203.7, filed with the China National Intellectual Property Administration on February 24, 2023 and entitled "SMART GLASSES", which is incorporated herein by reference in its entirety.

### TECHNICAL FIELD

This application relates to the field of electronic technologies, and in particular, to smart glasses.

### BACKGROUND

Smart glasses are a general term for wearable glasses devices that have an independent operation apparatus like a smartphone and that can implement various functions by installing software. The smart glasses feature ease of use, a small size, and the like. A main control chip, a communication module, a display module, a touchpad, a camera, an integrated circuit, and a power supply apparatus are integrated into the smart glasses, so that the smart glasses can work independently. The power supply apparatus determines a battery life of the smart glasses.

In a related technology, smart glasses usually use one temple for independent charging and discharging. For example, a charging chip and one or two batteries connected to the charging chip are disposed in one of two temples of the smart glasses, so that the charging chip controls the one or two batteries to perform charging and discharging. Due to limited internal space of a single temple, a battery in the temple has a small size and a low capacity, resulting in a short battery life of the smart glasses.

### SUMMARY

This application provides smart glasses, to improve a battery life of the smart glasses.

Technical solutions are as follows.

According to a first aspect, smart glasses are provided. The smart glasses include a first temple and a second temple, power management circuits are disposed in the first temple and the second temple, and the power management circuits are connected to a load of the smart glasses. When output voltages of the two power management circuits are not equal, a power management circuit whose output voltage is higher in the two power management circuits supplies power to the load; or when output voltages of the two power management circuits are equal, the two power management circuits jointly supply power to the load, or either of the two power management circuits supplies power to the load.

In this application, the power management circuits are respectively disposed in the two temples of the smart glasses. Therefore, compared with smart glasses having a battery in one temple, in the smart glasses in this application, more batteries may be disposed, to increase a battery capacity of the smart glasses, thereby improving a battery life. In addition, the power management circuit in each temple may separately supply power to the load, for example, the power management circuit whose output voltage is higher preferentially supplies power to the load, to ensure normal operation of the load; or the two power management circuits may jointly supply power to the load, to increase power output. There are various power supply manners, and therefore, the battery life of the smart glasses can be improved.

In a possible implementation, the power management circuit includes a charging/discharging management module, a switch device, and a battery module. The charging/discharging management module is connected in series between the battery module and a first end of the switch device, and both a second end of the switch device in the first temple and a second end of the switch device in the second temple are connected to the load. The power management circuit performs charging and discharging through the charging/discharging management module, and controls, through the switch device, whether to supply power to the load.

In a possible implementation, the smart glasses further include a processing module. The processing module is connected to the two power management circuits, and is configured to: obtain the output voltages of the two power management circuits; and when the output voltages of the two power management circuits are not equal, control the power management circuit whose output voltage is higher in the two power management circuits to supply power to the load. In this way, under different output voltages, different power management circuits may be used to supply power to the load.

In a possible implementation, the switch device is further connected to the processing module, and the processing module is configured to control turn-on and turn-off of the switch device in the first temple and the switch device in the second temple based on an output voltage of the charging/discharging management module in the first temple and an output voltage of the charging/discharging management module in the second temple. In this way, the processing module controls, based on magnitudes of the output voltages of the charging/discharging management modules, turn-on and turn-off of the switch devices, to control an occasion at which the power management circuits supply power to the load.

In a possible implementation, when the output voltage of the charging/discharging management module in either of the first temple and the second temple is higher than the output voltage of the charging/discharging management module in the other temple, the processing module is configured to: control the switch device in the temple with the higher output voltage to be turned on, and control the switch device in the temple with the lower output voltage to be turned off.

In a possible implementation, the output voltage of the charging/discharging management module in the first temple is equal to the output voltage of the charging/discharging management module in the second temple, and the processing module is configured to control the switch device in the first temple and/or the switch device in the second temple to be turned on.

In a possible implementation, an input end of the charging/discharging management module is further connected to an external power supply, and the charging/discharging management module is configured to charge the battery module by using the external power supply. In this way, the battery module can be charged.

In a possible implementation, the battery module includes at least one battery. A quantity of batteries in the first temple is the same as or different from a quantity of batteries in the second temple. In this way, the at least one battery may be disposed to increase a battery capacity.

In a possible implementation, when there are a plurality of batteries in each temple, the plurality of batteries are connected in series, or connected in parallel, or connected in series and parallel. In this way, a battery connection manner may be adaptively changed according to a structure of a temple of the smart glasses.

In a possible implementation, when the output voltages of the two power management circuits are equal, and the output voltages are lower than or equal to a preset voltage threshold, the two power management circuits jointly supply power to the load; or when the output voltages of the two power management circuits are equal, and the output voltages are higher than the preset voltage threshold, either of the power management circuits jointly supplies power to the load.

### BRIEF DESCRIPTION OF DRAWINGS

FIG. 1 is a diagram of a structure of smart glasses according to an embodiment of this application;
FIG. 2 is a diagram of a structure of a power supply circuit of smart glasses according to an embodiment of this application;
FIG. 3 is a diagram of another structure of a power supply circuit of smart glasses according to an embodiment of this application;
FIG. 4 is a diagram of a structure of a battery of smart glasses according to an embodiment of this application; and
FIG. 5 is a diagram of another structure of a battery of smart glasses according to an embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions or purposes. For example, a first charging chip and a second charging chip are merely used to distinguish between different charging chips, and a sequence is not limited therebetween. A person skilled in the art may understand that the terms such as "first" and "second" do not limit a quantity or an execution sequence, and the terms such as "first" and "second" do not indicate a definite difference.

It should be noted that in this application, the term such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the term such as "example" or "for example" is intended to present a relative concept in a specific manner.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Before embodiments of this application are described in detail, application scenarios of embodiments of this application are first described.

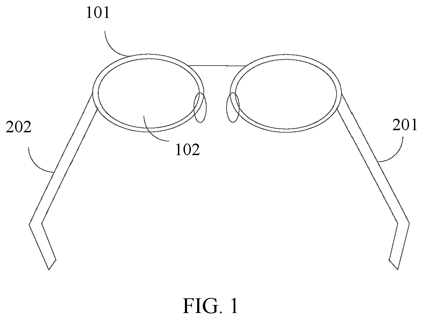

FIG. 1 is a diagram of a structure of smart glasses according to an embodiment of this application. As shown in FIG. 1, the smart glasses provided in this application include a frame and at least one lens 102. The frame includes lens frames 101 and two temples (such as a first temple 201 and a second temple 202 described below). Each lens frame 101 is connected to one temple. The lens 102 is disposed in each lens frame 101. When a user wears the smart glasses, the lens 102 is located in front of the eye of the user, and the two lenses 102 are respectively disposed in correspondence with the left eye and the right eye of the user. The two temples are located on two sides of the user's brain, and the ends of the temples are placed between the ears and the brain.

In current smart glasses, a processing module, a communication module, a display module, an integrated circuit, a power supply system, and the like are all integrated into a temple or a lens frame of the smart glasses. The processing module is a center for controlling running of each module in the smart glasses. The communication module is configured to implement communication between the smart glasses and another communication device, for example, Bluetooth communication. The display module is configured to display an interface of a related application in the smart glasses. The power supply system is used as a power supply end of each part of the smart glasses, and is usually disposed in the temple of the smart glasses due to a problem such as a size of a battery. The power supply system is charged through an external power supply device while discharging another module of the smart glasses. It may be understood that when the smart glasses are worn on the head of the user, the user may see the display module of the smart glasses. A lens 102 forms a part of the display module.

Currently, two charging and discharging manners are mainly used for a battery in the power supply system of smart glasses. One is independent charging and discharging through one temple. Specifically, a charging chip and one or two batteries connected to the charging chip are disposed in one of two temples of the smart glasses, so that the charging chip controls the one or two batteries to perform charging and discharging. However, due to limited internal space of a single temple, a battery in the temple has a small size and a low capacity, resulting in a short battery life of the smart glasses.

The other is integrated charging and discharging through two temples. Specifically, a charging chip is deployed in either of the two temples, and a battery is deployed in the other temple. Then, the charging chip and the battery in the two temples are electrically connected, so that the two temples work in an integrated manner. However, there is still a problem that a quantity of batteries that can be accommodated is limited due to limited internal space of the temple. As a result, there is also a problem of a low battery capacity and a short battery life. In addition, in the integrated charging and discharging through the two temples, the charging chip is relatively far away from the battery, and consequently, impedance of a path between the charging chip and the battery increases, resulting in a problem that the battery is not fully charged during charging, thereby affecting a battery life of the smart glasses.

Therefore, this application proposes smart glasses, to increase a quantity of batteries in the smart glasses and increase a total battery capacity in a distributed multi-battery charging and discharging manner, thereby improving a battery life of the smart glasses.

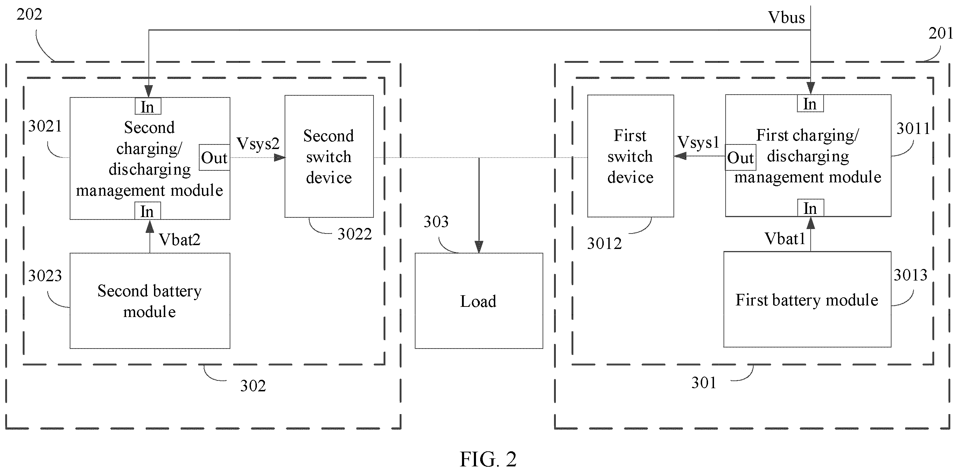

FIG. 2 is a diagram of a circuit structure of smart glasses according to an embodiment of this application. The smart glasses include a power management circuit located in a first temple 201 and a power management circuit located in a second temple 202. The power management circuits are connected to a load 303 of the smart glasses. When output voltages of the two power management circuits are not equal, a power management circuit whose output voltage is higher in the two power management circuits supplies power to the load 303; or when output voltages of the two power management circuits are equal, the two power management circuits jointly supply power to the load 303, or either of the two power management circuits supplies power to the load 303.

In an implementation of this application, that the power management circuit whose output voltage is higher in the two power management circuits supplies power to the load may be understood as follows: The power management circuit whose output voltage is higher in the two power management circuits is in a working state, and the other power management circuit is in a non-working state.

In an example, the first temple 201 and the second temple 202 each have accommodation space used for accommodating an electronic component. The power management circuits may be respectively located in the accommodation space of the first temple 201 and the accommodation space of the second temple 202.

For ease of description, the following uses an example in which the power management circuit disposed in the first temple 201 is a first power management circuit 301, and the power management circuit disposed in the second temple 202 is a second power management circuit 302 for description.

That when the output voltages of the two power management circuits are not equal, the power management circuit whose output voltage is higher in the two power management circuits supplies power to the load 303 may be understood as follows: When an output voltage of the first power management circuit 301 is not equal to an output voltage of the second power management circuit 302, for example, the output voltage of the first power management circuit 301 is Vsys1, and the output voltage of the second power management circuit 302 is Vsys2, if Vsys1≠Vsys2, for example, if Vsys1>Vsys2, the first power management circuit 301 supplies power to the load 303. That is, a circuit between the first power management circuit 301 and the load is connected, so that the first power management circuit 301 supplies power to the load 303; and a circuit between the second power management circuit 302 and the load 303 is disconnected, so that the second power management circuit 302 does not supply power to the load 303.

That when the output voltages of the two power management circuits are equal, the two power management circuits jointly supply power to the load 303 may be understood as follows: When an output voltage of the first power management circuit 301 is equal to an output voltage of the second power management circuit 302, for example, V1=V2, the first power management circuit 301 and the second power management circuit 302 jointly supply power to the load. That is, a circuit between the first power management circuit 301 and the load is connected, so that the first power management circuit 301 supplies power to the load; and a circuit between the second power management circuit 302 and the load is also connected, so that the second power management circuit 302 supplies power to the load. When the output voltages of the two power management circuits are equal, the two parallel power management circuits located in the two temples can jointly supply power to the load 303 when a battery level of the smart glasses is low.

In an example, the load 303 in the smart glasses may be all electronic components that need to be powered in the smart glasses. For example, the load 303 may be a processing module, a display module, or a communication module. The communication module is configured to implement communication between the smart glasses and another communication device, for example, Bluetooth communication. The display module is configured to display an interface of a related application in the smart glasses.

In this application, the power management circuits are respectively disposed in the two temples of the smart glasses. Therefore, compared with smart glasses having a battery in one temple, in the smart glasses in this application, more batteries may be disposed, to increase a battery capacity of the smart glasses, thereby improving a battery life. In addition, the power management circuit in each temple may separately supply power to the load, for example, the power management circuit whose output voltage is higher preferentially supplies power to the load, to ensure normal operation of the load; or the two power management circuits may jointly supply power to the load, to increase power output. There are various power supply manners, and therefore, the battery life of the smart glasses can be improved.

In a possible implementation of this application, the power management circuit includes a charging/discharging management module, a switch device, and a battery module. The charging/discharging management module is connected in series between the battery module and a first end of the switch device, and both a second end of the switch device in the first temple and a second end of the switch device in the second temple are connected to the load.

For example, as shown in FIG. 2, the second temple 202 is a right temple, and the first temple 201 is a left temple. The first power management circuit 301 includes a first charging/discharging management module 3011, a first switch device 3012, and a first battery module 3013. The second power management circuit 302 includes a second charging/discharging management module 3021, a second switch device 3022, and a second battery module 3023.

An output end of the first charging/discharging management module 3011 is connected to a first end of the first switch device 3012, and the first battery module 3013 is connected to a first input end of the first charging/discharging management module 3011. An output end of the second charging/discharging management module 3021 is connected to a first end of the second switch device 3022, and an output end of the second battery module 3023 is connected to a first input end of the second charging/discharging management module 3021. A second end of the first switch device 3012 and a second end of the second switch device 3022 are connected to the load.

It may be understood that the first charging/discharging management module 3011 is configured to control the first battery module 3013 connected to the first charging/discharging management module 3011 to perform charging and discharging; and the second charging/discharging management module 3021 is configured to control the second battery module 3023 connected to the second charging/discharging management module 3021 to perform charging and discharging.

In a possible implementation of this application, the charging/discharging management module is configured to at least supply power to the load through a battery component, that is, the battery module is discharged to supply power to the load. Optionally, the charging/discharging management module is further configured to charge the battery module by using an external power supply.

In an example, the charging/discharging management module may include two modules: a charging management module and a discharging management module. The charging management module is configured to supply power to the battery module by using the external power supply. The discharging management module is configured to: receive a voltage output by the battery module, and discharge the load according to the voltage, that is, supply power to the load. Certainly, the charging/discharging management module may alternatively be a module, for example, a charging/discharging chip that integrates a charging function and a discharging function, which is not limited herein.

In a possible implementation, when the switch device in the power management circuit is turned on, a circuit between the power management circuit and the load is connected. For example, when the first switch device 3012 is turned on, the first charging/discharging management module 3011 supplies power to the load by using a voltage provided by the first battery module 3013, and in this case, the first power management circuit 301 is in a working state; or when the second switch device 3022 is turned on, the second charging/discharging management module 3021 supplies power to the load by using a voltage output by the second battery module 3023, and in this case, the second power management circuit 302 is in a working state.

In a possible implementation, when the switch device is turned off, the power management circuit stops working, that is, the power management circuit does not supply power to the load. For example, when the first switch device 3012 is turned off, the first charging/discharging management module 3011 does not supply power to the load; or when the second switch device 3022 is turned off, the second charging/discharging management module 3021 does not supply power to the load.

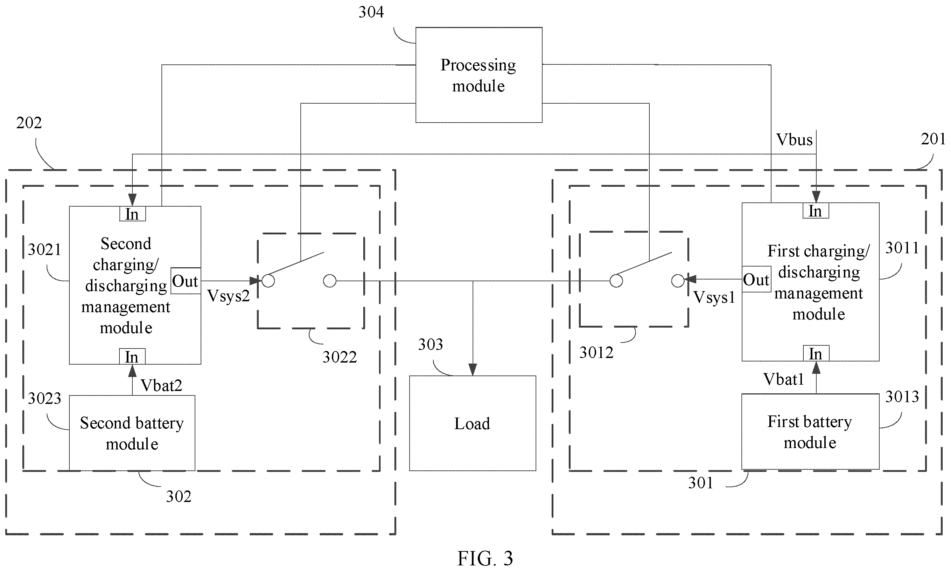

In an example, as shown in FIG. 3, the first switch device 3012 and the second switch device 3022 are single-pole single-throw switches. When the single-pole single-throw switches are turned on, a circuit is connected, that is, the first switch device 3012 and the second switch device 3022 are in an on state; or when the single-pole single-throw switches are turned off, a circuit is disconnected, that is, the first switch device 3012 and the second switch device 3022 are in an off state. It may be understood that the first switch device 3012 and the second switch device 3022 may alternatively be other devices that control connection and disconnection of a circuit. This is not limited herein.

FIG. 3 is a diagram of a circuit structure of smart glasses according to an embodiment of this application. As shown in FIG. 3, the smart glasses further include a processing module 304. The processing module 304 is connected to the two power management circuits, and is configured to: obtain the output voltages of the two power management circuits; and when the output voltages of the two power management circuits are not equal, control the power management circuit whose output voltage is higher in the two power management circuits to supply power to the load 303.

For example, the output voltage of the first power management circuit 301 in the first temple 201 is a first output voltage, and the output voltage of the second power management circuit 302 in the second temple 202 is a second output voltage. When the processing module 304 obtains the first output voltage and the second output voltage, the processing module 304 determines magnitudes of the first output voltage and the second output voltage. That the output voltages are not equal includes two cases: When the first output voltage is higher than the second output voltage, the processing module 304 controls the first power management circuit 301 to supply power to the load 303; and when the first output voltage is lower than the second output voltage, the processing module 304 controls the second power management circuit 302 to supply power to the load 303.

In a possible implementation of this application, as shown in FIG. 3, the switch device is further connected to the processing module 304, and the processing module 304 is configured to control, based on the output voltage of each charging/discharging management module, the switch device to be turned off or turned on. For example, the processing module 304 is connected to the first switch device 3012 and the second switch device 3022.

In a possible implementation, when the output voltage output by the charging/discharging management module in either of the first power management circuit 301 and the second power management circuit 302 is higher than the output voltage output by the charging/discharging management module in the other power management circuit, the processing module 304 is configured to: control the switch device in the power management circuit whose output voltage is higher to be turned on, and control the switch device in the power management circuit whose output voltage is lower to be turned off.

In an example, as shown in FIG. 3, a control end of the first switch device 3012 and a control end of the second switch device 3022 are both connected to the processing module 304. The first charging/discharging management module 3011 and the second charging/discharging management module 3021 are both connected to the processing module 304. When the processing module 304 detects that the first output voltage output by the first charging/discharging management module 3011 is higher than the second output voltage output by the second charging/discharging management module 3021, the processing module 304 is configured to: control the first switch device 3012 to be turned on, and control the second switch device 3022 to be turned off, so that the first charging/discharging management module 3011 supplies power to the load 303 by using the voltage provided by the first battery module 3013. When the processing module 304 detects that the first output voltage output by the first charging/discharging management module 3011 is lower than the second output voltage output by the second charging/discharging management module 3021, the processing module 304 is configured to: control the second switch device 3022 to be turned on, and control the first switch device 3012 to be turned off, so that the second charging/discharging management module 3021 supplies power to the load 303.

In a possible implementation, when the first output voltage is equal to the second output voltage, the processing module 304 is configured to control the switch device in the first power management circuit and the switch device in the second power management circuit to be turned on.

In an example, as shown in FIG. 3, when the processing module 304 detects that the first output voltage output by the first charging/discharging management module 3011 is equal to the second output voltage output by the second charging/discharging management module 3021, the processing module 304 is configured to control the first switch device 3012 and the second switch device 3022 to be turned on, that is, enable the first charging/discharging management module 3011 and the second charging/discharging management module 3021 to supply power to the load 303 at the same time.

In a possible embodiment of this application, the battery module includes at least one battery.

For example, the battery may be a rechargeable battery, or may be a non-rechargeable battery. It may be understood that, when the battery is the non-rechargeable battery, a base for accommodating the battery may be disposed in the temple.

A quantity of batteries in the first temple is the same as or different from a quantity of batteries in the second temple. For example, the first temple 201 may include one battery, and the second temple 202 may include two batteries. Alternatively, the first temple 201 and the second temple 202 each include two batteries. Optionally, when internal space of the first temple 201 and the second temple 202 is relatively large, the quantity of batteries in each temple may be greater than or equal to 2. This is not limited in this embodiment of this application.

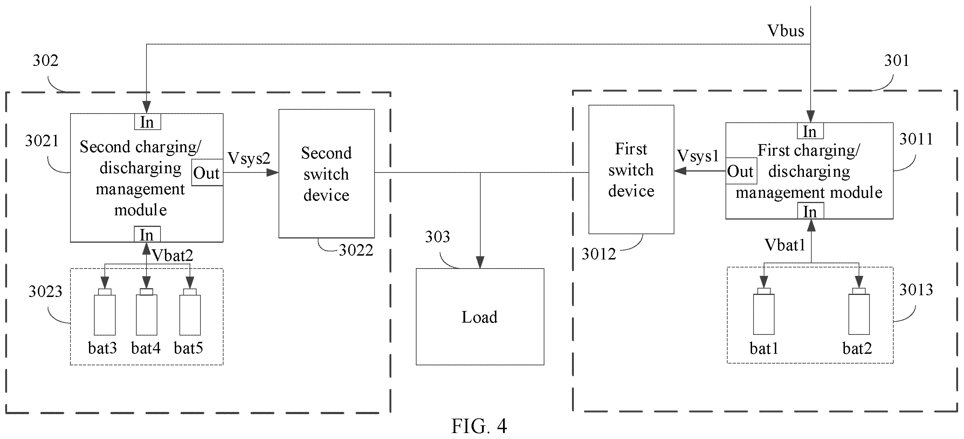

In an example, as shown in FIG. 4, the first battery module 3013 in the first power management circuit 301 includes two batteries: a battery bat1 and a battery bat2, and the second battery module 3023 in the second power management circuit 302 includes three batteries: a battery bat3, a battery bat4, and a battery bat5.

Models of the batteries may be the same, or may be different. This is not limited herein. A quantity of batteries in the first battery module 3013 may be equal to or not equal to a quantity of batteries in the second battery module 3023. This is not limited herein.

In an example, a battery bat1 and a battery bat2 are disposed in the second power management circuit 302, where a model of the battery bat1 is A, and a model of the battery bat2 is B; and a battery bat3, a battery bat4, and a battery bat5 are disposed in the first power management circuit 301, and models of the battery bat3, the battery bat4, and the battery bat5 are all C.

In a possible embodiment of this application, when there are a plurality of batteries in each battery module, the plurality of batteries are connected in series, or connected in parallel, or connected in series and parallel.

Specifically, when the quantity of batteries in the first battery module 3013 or the second battery module 3023 is 2, a connection manner between the batteries is a series connection or a parallel connection. When the quantity of batteries in the first battery module 3013 or the second battery module 3023 is greater than 2, in addition to a series connection or a parallel connection, a connection manner between the batteries may be a series and parallel connection.

In an example, as shown in FIG. 4, the first battery module 3013 in the first power management circuit 301 includes two batteries: a battery bat1 and a battery bat2, where the battery bat1 and the battery bat2 are connected in parallel. Specifically, a positive electrode of the battery bat1 and a positive electrode of the battery bat2 are both connected to the first charging/discharging management module 3011.

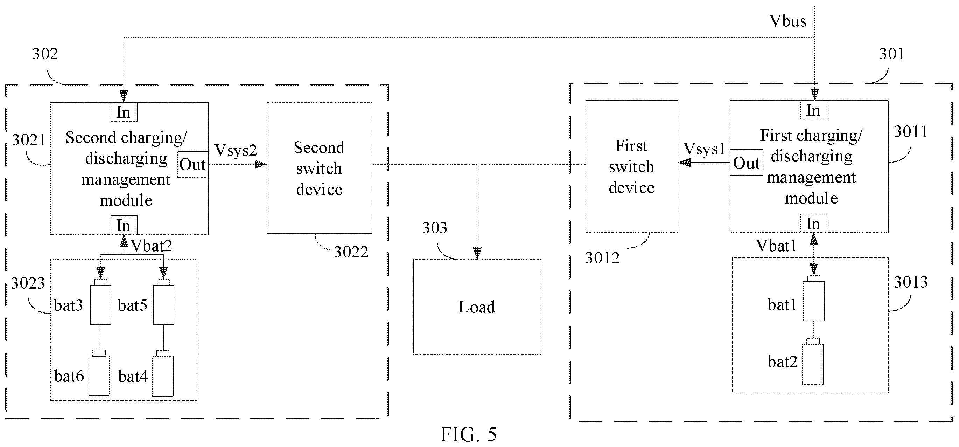

In another example, as shown in FIG. 5, the first battery module 3013 in the first power management circuit 301 also includes two batteries: a battery bat1 and a battery bat2, where the battery bat1 and the battery bat2 are connected in series. Specifically, a positive electrode of the battery bat1 is connected to the first charging/discharging management module 3011, and a negative electrode of the battery bat1 is connected to a positive electrode of the battery bat2.

The series and parallel connection is a connection manner that combines both a series connection and a parallel connection. A connection manner of the batteries may be freely combined. This is not limited herein.

In an example, as shown in FIG. 5, the first battery module 3013 in the second power management circuit 302 includes four batteries: a battery bat3, a battery bat4, a battery bat5, and a battery bat6, where the battery bat3 and the battery bat5 are connected in parallel, that is, a positive electrode of the battery bat3 and a positive electrode of the battery bat5 are connected to the second charging/discharging management module 3021; the battery bat5 and the battery bat4 are connected in series, that is, the positive electrode of the battery bat5 is connected to a negative electrode of the battery bat4; and the battery bat6 and the battery bat3 are connected in series, that is, a positive electrode of the battery bat6 is connected to a negative electrode of the battery bat3.

In a possible implementation of this application, the first power management circuit 301 and the second power management circuit 302 are both connected to the external power supply. For example, the first power management circuit 301 and the second power management circuit 302 are both connected to a power supply interface of the smart glasses, and the power supply interface is configured to connect to the external power supply. For example, the input ends of the charging/discharging management modules in the first power management circuit 301 and the second power management circuit 302 are further connected to the external power supply. The charging/discharging management module is configured to charge the battery module by using the external power supply. For example, the first charging/discharging management module 3011 is configured to charge the first battery module 3013 by using the external power supply, and the second charging/discharging management module 3021 is configured to charge the second battery module 3023 by using the external power supply.

In a possible implementation, the charging/discharging management module may be connected to the external power supply through an external interface for charging, or may be charged in an inductive charging mode. For example, the smart glasses are placed in a smart glasses charging case matching the smart glasses for charging. This is not limited herein.

In an example, the charging/discharging management module is connected to the external power supply through the external interface for charging. When the charging chip module receives an external power supply voltage Vbus provided by the external power supply, if the switch device is turned on in this case, a circuit between the charging/discharging management module and the load 303 is connected, so that the external power supply voltage Vbus may also supply power to the load 303 through the charging/discharging management module. It may be understood that the external power supply voltage Vbus may charge the battery module and supply power to the load 303 at the same time.

In a possible embodiment of this application, when the output voltages of the two power management circuits are equal, and the output voltages of the power management circuits are lower than or equal to a preset voltage threshold, the two power management circuits jointly supply power to the load 303; or when the output voltages of the two power management circuits are equal, and the output voltages are higher than the preset voltage threshold, either of the power management circuits jointly supplies power to the load 303.

In an example, when the first output voltage Vsys1 of the first power management circuit 301 is equal to the second output voltage Vsys2 of the second power management circuit 302, the first output voltage Vsys1 and the second output voltage Vsys2 are values A, and the values A are both less than the preset voltage threshold, the first power management circuit 301 and the second power management circuit 302 jointly supply power to the load 303.

In a possible implementation, the two power management circuits are connected to the processing module 304. When the processing module 304 detects that the first output voltage Vsys1 of the first power management circuit 301 is equal to the second output voltage Vsys2 of the second power management circuit 302, and the first output voltage Vsys1 and the second output voltage Vsys2 are lower than or equal to the preset voltage threshold, the processing module 304 controls the first switch device 3012 in the first power management circuit 301 and the second switch device 3022 in the second power management circuit 302 to be turned on, so that the first charging/discharging management module 3011 and the second charging/discharging management module 3021 supply power to the load 303 at the same time.

In a possible implementation of this application, when the first output voltage Vsys1 of the first power management circuit 301 is not equal to the second output voltage Vsys2 of the second power management circuit 302, and the output voltages of the two power management circuits are higher than the preset threshold, the first power management circuit 301 or the second power management circuit 302 may supply power to the load 303.

In a possible implementation of this application, the first temple 201 and a lens frame connected to the first temple 201 may be considered as a first frame; and the second temple 202 and a lens frame connected to the second temple 202 may be considered as a second frame. The first power management circuit 301 may be disposed in the first frame, and the second power management circuit 302 may be disposed in the second frame. For example, the first charging/discharging management module 3011 in the first power management circuit 301 is disposed in the lens frame connected to the first temple 201, and the first battery module 3013 is disposed in the first temple 201; and the second charging/discharging management module 3021 in the second power management circuit 302 is disposed in the lens frame connected to the second temple 202, and the second battery module 3023 is disposed in the second temple 202. For example, the first charging/discharging management module 3011 in the first power management circuit 301 is disposed in the first temple 201, and the first battery module 3013 is disposed in the lens frame connected to the first temple 201; and the second charging/discharging management module 3021 in the second power management circuit 302 is disposed in the second temple 202, and the second battery module 3023 is disposed in the lens frame connected to the second temple 202.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clearly that a person skilled in the art can make various modifications and variations to this application without departing from the spirit and scope of this application. In this case, this application is intended to cover these modifications and variations of this application provided that they fall within the scope of protection defined by the following claims and their equivalent technologies.

## Claims

1. Smart glasses, wherein the smart glasses comprise a first temple and a second temple, power management circuits are disposed in the first temple and the second temple, and the power management circuits are connected to a load of the smart glasses; and
when output voltages of the two power management circuits are not equal, a power management circuit whose output voltage is higher in the two power management circuits supplies power to the load; or
when output voltages of the two power management circuits are equal, the two power management circuits jointly supply power to the load, or either of the two power management circuits supplies power to the load.

2. The smart glasses according to claim 1, wherein the power management circuit comprises a charging/discharging management module, a switch device, and a battery module, wherein
the charging/discharging management module is connected in series between the battery module and a first end of the switch device, and both a second end of the switch device in the first temple and a second end of the switch device in the second temple are connected to the load.

3. The smart glasses according to claim 1 or 2, wherein the smart glasses further comprise a processing module, wherein
the processing module is connected to the two power management circuits, and is configured to: obtain the output voltages of the two power management circuits; and when the output voltages of the two power management circuits are not equal, control the power management circuit whose output voltage is higher in the two power management circuits to supply power to the load.

4. The smart glasses according to claim 2 or 3, wherein the switch device is further connected to the processing module, and the processing module is configured to control turn-on and turn-off of the switch device in the first temple and the switch device in the second temple based on an output voltage of the charging/discharging management module in the first temple and an output voltage of the charging/discharging management module in the second temple.

5. The smart glasses according to claim 4, wherein when the output voltage of the charging/discharging management module in either of the first temple and the second temple is higher than the output voltage of the charging/discharging management module in the other temple, the processing module is configured to: control the switch device in the temple with the higher output voltage to be turned on, and control the switch device in the temple with the lower output voltage to be turned off.

6. The smart glasses according to claim 4, wherein the output voltage of the charging/discharging management module in the first temple is equal to the output voltage of the charging/discharging management module in the second temple, and the processing module is configured to control the switch device in the first temple and/or the switch device in the second temple to be turned on.

7. The smart glasses according to any one of claims 2 to 6, wherein an input end of the charging/discharging management module is further connected to an external power supply, and the charging/discharging management module is configured to charge the battery module by using the external power supply.

8. The smart glasses according to any one of claims 2 to 7, wherein the battery module comprises at least one battery.

9. The smart glasses according to claim 8, wherein when there are a plurality of batteries in each temple, the plurality of batteries are connected in series, or connected in parallel, or connected in series and parallel.

10. The smart glasses according to any one of claims 1 to 9, wherein when the output voltages of the two power management circuits are equal, and the output voltages are lower than or equal to a preset voltage threshold, the two power management circuits jointly supply power to the load; or
when the output voltages of the two power management circuits are equal, and the output voltages are higher than a preset voltage threshold, either of the power management circuits supplies power to the load.
